# EUROPEAN PATENT SPECIFICATION

(11) **EP 3 806 656 B1**
(45) Date of publication and mention of the grant of the patent: **15.12.2021**
(21) Application number: 18789509.9
(22) Date of filing: 31.08.2018
(51) Int. Cl.: A23L 2/52, A23L 2/66, A23L 7/10, A23L 33/21

(54) **A NON-ALCOHOLIC FUNCTIONAL BEVERAGE WITH A MALT BASE OR BASED ON NON-ALCOHOLIC BEER OR A WATER-AROMA BASE ENRICHED WITH AMINO ACIDS AND DIETARY FIBRE AS WELL AS A METHOD OF MANUFACTURING A NON-ALCOHOLIC FUNCTIONAL BEVERAGE WITH A MALT BASE OR BASED ON NON-ALCOHOLIC BEER OR A WATER-AROMA BASE, ENRICHED WITH AMINO ACIDS AND DIETARY FIBRE**
ALKOHOLFREIES FUNKTIONELLES GETRÄNK MIT EINER MALZBASIS ODER AUF BASIS VON ALKOHOLFREIEM BIER ODER EINER MIT AMINOSÄUREN UND BALLASTSTOFFEN ANGEREICHERTEN WASSER-AROMA-BASIS SOWIE VERFAHREN ZUR HERSTELLUNG EINES ALKOHOLFREIEN FUNKTIONSGETRÄNKS MIT EINER MALZBASIS ODER AUF BASIS VON ALKOHOLFREIEM BIER ODER EINER WASSER-AROMA-BASIS, ANGEREICHERT MIT AMINOSÄUREN UND BALLASTSTOFFEN
BOISSON FONCTIONNELLE NON ALCOOLISÉE AVEC UNE BASE DE MALT OU À BASE DE BIÈRE NON ALCOOLISÉE OU AVEC UNE BASE EAU-ARÔME ENRICHIE EN ACIDES AMINÉS ET EN FIBRES ALIMENTAIRES, AINSI QU'UN PROCÉDÉ DE FABRICATION D'UNE BOISSON FONCTIONNELLE NON ALCOOLISÉE AVEC UNE BASE DE MALT OU À BASE DE BIÈRE NON ALCOOLISÉE OU AVEC UNE BASE EAU-ARÔME, ENRICHIE EN ACIDES AMINÉS ET EN FIBRES ALIMENTAIRES

(30) Priority: 12.06.2018 PL 42590318
(43) Date of publication of application: 21.04.2021
(73) Proprietor: DRINK ID sp. z o.o., 97-300 Piotrkow Trybunalski (PL)
(72) Inventor: BERLOWSKA, Joanna, 90-365 Lódz (PL); KREGIEL, Dorota, 93-558 Lódz (PL); ANTOLAK, Hubert, 90-402 Lódz (PL); SZYMANSKA, Monika, 97-213 Smardzewice (PL)
(74) Representative: Domon, Magdalena
(86) International application number: PCT/PL2018/000085
(87) International publication number: WO 2019/240603

(56) References cited:
- EP-A1- 1 835 018
- KR-B1- 101 352 655
- US-A- 6 004 610
- US-A1- 2003 157 218

## Description

The present invention relates to a non-alcoholic functional beverage with a malt base or based on non-alcoholic beer or a water-aroma base, enriched with amino acids, and dietary fibre and a method of manufacturing a non-alcoholic functional beverage with a malt base or based on non-alcoholic beer or a water-aroma base, enriched with amino acids and dietary fibre for application as a nutraceutical for each age group.

Dietary fibre as well as essential amino acids are very important for the correct functioning of the organism.

Dietary fibre has a lot of health-promoting properties, which include:
- a positive effect on carbohydrate metabolism by decreasing plasma glucose concentrations;
- enhancing the feeling of satiation after a meal as a result of filling of the stomach;
- improving lipid metabolism by decreasing concentrations of total cholesterol and triglycerides;
- swollen dietary fibre moves from the stomach to the intestines where it stimulates intestinal peristalsis and the process of digestion;
- a natural detox effect. While swelling in the alimentary tract it binds many toxins and harmful products of metabolism and intestinal fermentation.

Amino acids are essential for the correct functioning of the organism. They can be divided into essential (exogenous) amino acids, which cannot be synthesised by the human organism and thus must be supplied in adequate amounts in the diet (leucine, isoleucine, valine, lysine, threonine, methionine, phenylalanine and tryptophan) and conditionally essential amino acids, which are not synthesised in adequate amounts in infants or in ill individuals and must be supplied to them in the diet (histidine and arginine). They take part in synthesising substances that are important for the health, such as hormones (e.g. insulin, thyroxine, and adrenaline), bodily fluids, enzymes and neurotransmitters transmitting electrical impulses in the brain. Amino acids also assist in regeneration of damaged cells, muscles, skin and internal organs. During intense physical activity amino acids turn into building material for muscles and a source of energy, therefore they are taken by people doing sports. Due to these properties, amino acids are used in treating people suffering from loss of muscle mass (e.g. in the elderly, bedridden and otherwise immobilised patients). Deficiency of amino acids is typically caused by improper diet, e.g. eating low-protein meals or vegetarian diet but it can also be caused by a disease. Lack of amino acids, e.g. cysteine, is manifested by compromised immunity and impaired fat burning. The deficiency can be replenished with appropriate food products or preparations.

In the state of the art, there are known various kinds of functional beverages. They contain dietary fibre or essential amino acids. KR101352655 B1 relates to rice beverage containing high contents of amino acid with precipitate stability and a producing method thereof which comprises a step of pulverizing water soaked rice, and a step of adding agar to the rice powder for preventing the rice powder from precipitating, making the rice power float for a long time, and enabling users to easily drink the beverage.

However, any functional beverages containing both these ingredients are not known.

At the same time, it is also a huge technological challenge to create a functional beverage that would make it possible to utilise to the largest possible extent the waste materials produced by the brewing industry.

It is important to utilise yeast slurry containing approx. 10% of dry mass of *Saccharomyces cerevisiae* yeast, which lost its vitality and viability in the course of the production of alcohol from malt sugars in the production of beer, where it is also crucial that autolysates be obtained without added salt or ethyl alcohol so as not to introduce any foreign flavours and not to disturb the character of the ready beverage, and also to make it suitable for all age groups.

Autolysates of yeast cells are a precious source of proteins and yeast extracts are more and more commonly used in the food industry as flavour enhancers, with the aroma or flavour of cheese, broth or meat, and as dietary supplements. These preparations are used as aroma enhancers in foodstuffs such as sauces, soups, and meat and fish dishes as well as in seasoning mixtures. Yeast extracts are obtained, inter alia, from food yeast and also post-fermentation yeast used in the production of beer or wine.

In the state of the art, there are known various methods of obtaining essential amino acids. Inter alia, in patent PL226057 there is described a method of obtaining yeast cell extract intended for food or feed uses.

The method of obtaining extracts from yeast cell by way of simultaneous inactivation and induced autolysis of yeast cells, as described in patent PL226057 and the embodiments, consists in heating a yeast cell suspension at below 100°C with added autolysis inducer, for up to 48 hours, and then separating the autolysate from the rest by way of centrifuging or filtration and fixing it with optional use of NaCl, alcohol, proteolytic enzymes as autolysis inducers, in which the autolysis inducer used is saponin obtained from the soap bark tree, Quillaja saponaria, pure or in the form of soap bark extract, in the amount of 0.001-1% by weight relative to the yeast cell mass, or with another inducer or other inducers of autolysis like NaCl used in the amount of 10-50% by weight relative to the yeast cell mass and/or alcohol used in the amount of 10-70% by weight relative to the yeast cell mass and/or exo- or endoproteases used in such amount that ensures activity of 1-100U/ml yeast suspension. The process of inactivation and autolysis is applied to a yeast cell suspension with a density of 10⁵-10¹⁰ cfu/mL, which is heated with an autolysis inducer or autolysis inducers for 12-48 hours at 30-60°C.

Research is also focussed on finding fast and low-cost ways of obtaining dietary fibre from brewers' grains and using it in functional beverages.

Brewers' grains are a perishable product and must be used within a short time or preserved by ensiling or drying. There are studies concerning hydrolysis of brewers' grains by means of acids, bases or enzymes in order to obtain hydrolysates with a high content of simple sugars which are subsequently used mainly in fermentation processes to produce ethanol or lactic acid. A significant content of celluloses, hemicelluloses and especially lignins, forming a compact structure, in brewers' grains hinders enzymatic decomposition of grains and thereby constitutes an obstacle to effective utilisation of saccharides. It is believed that the kind of pre-treatment of brewers' grains as well as the manner of conducting the hydrolysis itself with cellulolytic enzymes involved in the process has an impact on the kind and quality of the obtained hydrolysate.

The purpose of the invention is to develop a functional beverage from the group of so-called nutraceutical containing natural dietary fibre obtained from brewers' grains and essential amino acids obtained from waste yeast slurry and thereby to combine in a functional beverage essential amino acids and dietary fibre which are nutritionally valuable and health-promoting, and moreover, their properties are complementary with each other.

The purpose of the solution according to the invention is also to develop a fast and cost-effective method of obtaining dietary fibre from brewers' grains.

The non-alcoholic functional beverage with a malt base or based on non-alcoholic beer or a water-aroma base, enriched with amino acids, and dietary fibre according to the invention is characterised in that it contains both autolysate obtained from waste yeast slurry and dietary fibre obtained from fragmented brewers' grains.

The method of manufacturing a non-alcoholic functional beverage with a malt base or based on non-alcoholic beer or a water-aroma base, enriched with amino acids and dietary fibre is characterised in that dietary fibre suspension and yeast autolysate are obtained in separate (parallel) technological processes where the dietary fibre suspension is obtained in such manner that brewers' grains are mixed with water in the ratio of 1:1, then fragmented at room temperature in a homogeniser, and then the obtained suspension is filtered through a filtration fabric in order to separate particles larger than 0.5 mm while yeast autolysate is obtained in such manner that yeast slurry is subjected to the process of incubation conducted in a reactor with a heating mantle (45-50°C) and mixing with water in the ratio of 1:1 with added saponin (Quillaja extract) as the inducer where the saponin concentration is 0.04% w/v relative to diluted yeast slurry; then, after completing the stage of autolysis, the solid fraction is separated by centrifuging in a cooled centrifuge, after which the dietary fibre suspension and autolysate are combined with the base ingredients in the form of malt base or non-alcoholic beer or water-aroma base enriched with flavour and aroma additives to create a non-alcoholic functional beverage.

The advantageously obtained dietary fibre suspension and autolysate are in the first instance stored under refrigeration for up to 48 hours and afterwards they undergo pasteurisation, and then they are combined with the base ingredients in the form of malt base or non-alcoholic beer or water-aroma base enriched with flavour and aroma additives to create a non-alcoholic functional beverage.

It is also advantageous when the obtained dietary fibre suspension and autolysate are in the first instance combined with the base ingredients in the form of malt base or non-alcoholic beer or water-aroma base enriched with flavour and aroma additives to create a non-alcoholic functional beverage which is subsequently subjected to pasteurisation. Based on the research carried out, it appears that the process of obtaining amino acids from waste yeast slurry allows for a reduction of the waste produced on average by 50%. The functional beverage that the present invention refers to is characterised by a low sugar content, low caloric content and a pleasant, refreshing taste. The beverage is enriched with soluble dietary fibre the source of which are fragmented, diluted (1:1) brewers' grains in which the soluble fraction of dietary fibre makes up approx. 3.5%DM while the insoluble fraction makes up approx. 21%DM and with amino acids obtained from a natural source (waste yeast slurry). The amino acid pool obtained from waste yeast slurry is characterised by the presence of essential and non-essential amino acids, including branched-chain amino acids (BCAA), i.e. leucine, isoleucine and valine. The source of amino acids is yeast autolysate, containing acc. to preliminary assumptions a total of approx. 31 mg of amino acids per mL, of which essential and non-essential amino acids will be 17.9 mg/mL.

Obtaining clear autolysate is possible using a cooled centrifuge (approx. 10°C, 3,000 x g). The greater the centrifugal force (g-force), the better separation of remaining waste yeast slurry.

The most advantageous amino acid profiles of autolysates (the lowest protein level and the highest FAN (Free Amino Nitrogen) level) were obtained in the process of incubation after 48 hours, where the inducer was saponin (Quillaja extract) in a concentration of 0.08% w/v (for undiluted yeast slurry, i.e. 0.04 % w/v for waste yeast slurry diluted 1:1) at 45°C. It is estimated that 1 kg of waste yeast slurry mixed with 1 litre of water (weight ratio 1:1) is enough to obtain approx. 1-1.4 litre clear autolysate, after autolysis and separation of the solids. In the autolysis, the total amount of amino acids in the range between 48 g/L and 52.4 g/L of which essential amino acids make up between 50% and 52% depending on the concentration of saponin as the inducer.

Autolysate in this form and at this stage does not contain any preservatives; thus, being a perishable product, it must be stored under refrigeration not longer than 48 hours. If longer storage is required, autolysate must be stored frozen.

The most advantageous method of preservation of brewers' grains intended for supplementing functional beverages is by freezing. This method ensures the microbiological stability of the brewers' grains and the soluble fraction of dietary fibre under storage conditions. If necessary, brewers' grains can also be stored under refrigeration for a maximum of 2 days.

The most advantageous method of preservation of intended for supplementing functional beverages is by freezing. This method ensures above all the microbiological stability of the autolysate under storage conditions as well as maintaining its chemical characteristics. In the studies, freezing was done at -20°C but freezing at other temperatures, e.g. -5°C, which is typically reached in industrial chest freezers, also preserves both the microbiological and the chemical stability of the autolysate. If necessary, autolysate can be stored under refrigeration for a period not longer than two days (however, such a storage scheme will not provide microbiological protection of autolysate).

The advantage of the solution according to the invention is obtaining a functional beverage with a very high content of essential and conditionally essential amino acids and dietary fibre.

Furthermore, as a result of applying the methods of obtaining amino acids and dietary fibre described herein, waste materials from the brewing industry are utilised. This concerns in particular waste yeast slurry, containing approx. 10% of dry mass of yeast of the *Saccharomyces cerevisiae* strain, which lost its vitality and viability in the course of the production of alcohol from malt sugars in the production of beer. The utilisation of yeast extract for the production of the functional beverage solves the problem of disposal of waste yeast slurry which is a significant environmental burden because waste yeast slurry is aggressive waste, and its basic form it cannot be processed at the standard biological and chemical treatment plants due to the fact that huge amount of oxygen is required for the degradation of this waste.

There are known methods of processing waste yeast slurry in order to recover dried yeast and ethyl alcohol. Recovered dried yeast can be used as an additive for animal feed and recovered ethyl alcohol can be used as a contribution to renewable fuels. However, the process wastewater is also noxious waste with a high requirement for oxygen, both biological and chemical.

Hence utilisation of the biomass of waste yeast slurry is of great importance in the context of reducing the biologic and chemical requirement for oxygen in the process of its disposal.

The method of preparing the non-alcoholic beverage according to the invention is presented in embodiments.

### Embodiment 1

Dietary fibre suspension and yeast autolysate are obtained in separate (parallel) technological processes, where:
- the dietary fibre suspension is obtained in such manner that brewers' grains are mixed with water in the ratio of 1:1, then the obtained suspension is fragmented in a homogeniser at room temperature and then filtered through a filtration fabric in order to separate particles larger than 0.5 mm;
- the yeast autolysate, being a source of essential and non-essential amino acids, is obtained in such manner that waste yeast slurry is subjected to the process of incubation conducted in a reactor with a heating mantle (45-50°C) and mixing with water in the ratio of 1:1 with added saponin (Quillaja extract) as the inducer where the saponin concentration is 0.04% w/v relative to diluted yeast slurry; then, after completing the stage of autolysis, the solid fraction is separated by centrifuging in a cooled centrifuge.

The dietary fibre suspension and autolysate obtained in this way are stored under refrigeration for up to 48 hours or subjected separately to pasteurisation, which enables preventing intensive Maillard reactions resulting in reduced sugar and FAN content.

An alternative solution consists in adding only pasteurised dietary fibre from brewers' grains, under aseptic conditions, to mechanically sterilised (microfiltration) beverage base with autolysate.

After the process of pasteurisation, the dietary fibre suspension and the autolysate are combined with the base ingredients in the form of malt base or non-alcoholic beer or water-aroma base, enriched with flavour and aroma additives to create a non-alcoholic functional beverage.

In the beverage obtained acc. to the embodiment, autolysate content is 5.6% w/v and the content of dietary fibre from fragmented brewers' grains is at least 2g/100 mL.

Furthermore, the functional beverage in the on malt base variant also contains other natural ingredients including malt base at 10% v/v, sugar (glucose) at 6.8% w/v, citrus pectin at 0.003% w/v, citric acid at 0.15% w/v, Quillaja saponaria extract (soap bark extract) at 0.0015% w/v, elderberry blossom syrup at 1-4% v/v; it is also enriched with beer aroma at 0.035% v/v and apple or mint aroma at 0.06% v/v.

On the other hand, the functional beverage in the variant based on non-alcoholic beer additionally contains barley malt, bitter and aromatic hops and lactic acid (as acidity regulator).

### After bottling the functional beverage is stored under refrigeration

### Embodiment 2

In the second embodiment, the dietary fibre suspension and autolysate obtained acc. to the first embodiment are in the first instance combined with the base ingredients in the form of a non-alcoholic beverage or a malt base or non-alcoholic beer, and thereafter subjected to pasteurisation.

The pasteurisation process takes place in a tunnel pasteuriser at 60°C for 20 minutes or at 80°C for 10 minutes, or using a flow pasteuriser at 90-93°C for 60 seconds.

The pasteurisation process is characterised by effectiveness in maintaining the microbiological stability of the functional beverage provided that the appropriate pH level of the beverage is maintained as well as the CO₂ saturation level and the storage temperature.

The embodiments presented herein should by no means be treated as an exhaustive list limiting the scope of the invention the idea of which has been characterised in the patent claims.

## Claims

1. A non-alcoholic functional beverage with a malt base or based on non-alcoholic beer or a water-aroma base enriched with amino acids and dietary fibre **characterised in that** it contains at the same time autolysate obtained from waste yeast slurry and dietary fibre obtained from fragmented brewers' grains.

2. A method of manufacturing a non-alcoholic functional beverage with a malt base or based on non-alcoholic beer or a water-aroma base, enriched with amino acids and dietary fibre **characterised in that** dietary fibre suspension and yeast autolysate are obtained in separate (parallel) technological processes where the dietary fibre suspension is obtained in such manner that brewers' grains are mixed with water in the ratio of 1:1, then fragmented at room temperature in a homogeniser, and then the obtained suspension is filtered through a filtration fabric in order to separate particles larger than 0.5 mm while yeast autolysate is obtained in such manner that yeast slurry is subjected to the process of incubation conducted in a reactor with a heating mantle (45-50 °C) and mixing with water in the ratio of 1:1 with added saponin (Quillaja extract) as the inducer where the saponin concentration is 0.04% w/v to relative to diluted yeast slurry; then, after completing the stage of autolysis, the solid fraction is separated by centrifuging in a cooled centrifuge, after which the dietary fibre suspension and autolysate are combined with the base ingredients in the form of malt base or non-alcoholic beer or water-aroma base enriched with flavour and aroma additives to create a non-alcoholic functional beverage.

3. The method of manufacturing a non-alcoholic functional beverage **according to claim 2 characterised in that** the obtained dietary fibre suspension and autolysate are in the first instance stored under refrigeration for up to 48 hours and afterwards they undergo pasteurisation, and then they are combined with the base ingredients in the form of malt base or non-alcoholic beer or water-aroma base enriched with flavour and aroma additives to create a non-alcoholic functional beverage.

4. The method of manufacturing a non-alcoholic functional beverage **according to claim 2 characterised in that** the obtained dietary fibre suspension and autolysate are in the first instance combined with the base ingredients in the form of malt base or non-alcoholic beer or water-aroma base enriched with flavour and aroma additives to create a non-alcoholic functional beverage which is subsequently subjected to pasteurisation.

## Patentansprüche

1. Alkoholfreies Funktionsgetränk auf Malzbasis oder auf Basis alkoholfreien Biers oder auf Aroma-Wasserbasis, angereichert mit Aminosäuren oder Ballaststoffen **charakteristisch dadurch**, dass es in seiner Zusammensetzung gleichzeitig das Autolysat, erhalten aus dem Abfallprodukt, dem Hefeschlamm, und den Ballaststoffen, erhalten aus zerkleinertem Brautreber, enthält.

2. Herstellungsmethode für alkoholfreies Funktionsgetränk auf Malzbasis oder auf Basis alkoholfreien Biers oder auf Aroma-Wasserbasis, angereichert mit Aminosäuren oder Ballastoffen **charakteristisch dadurch**, dass in getrennten (parallel verlaufenden) technologischen Prozessen Suspension der Ballaststoffe und Hefeautolysat erhalten werden, wobei die Suspension der Ballaststoffe auf eine solche Art und Weise erhalten wird, dass Brautreber mit Wasser im Verhältnis 1:1 gemischt, anschließend in Zimmertemperatur mit einem Homogenisator zerkleinert wird, anschließend die erhaltene Suspension durch ein Filtergewebe zwecks Separation der Teilchen von über 0,5 mm filtriert wird, demgegenüber wird das Hefeautolysat auf eine solche Art und Weise erhalten, dass der Hefeschlamm dem Inkubationsprozess, geführt in einem Reaktor mit Heizmantel (45-50°C) und Mischen mit Wasser im Verhältnis 1:1, mit Zugabe der Saponine (Quillaja-Extrakt) als Induktor, wo die Konzentration der Saponine gegenüber gestrecktem Hefeschlamm 0,04 % w/v beträgt, unterworfen wird, und anschließend nach Abschluss der Autolyse-Phase die Separation des Feststoffanteils durch Zentrifugieren in einer Zentrifuge mit Kühlung durchgeführt wird, wonach die auf eine solche Art und Weise erhaltene Suspension der Ballaststoffe und das Autolysat mit Basiskomponenten in Form der Malzbasis und des alkoholfreien Biers oder der Aroma-Wasserbasis, angereichert durch Geschmacks-und Geruchszusätze verbunden werden und so alkoholfreies Funktionsgetränk bilden.

3. Herstellungsmethode für alkoholfreies Funktionsgetränk gemäß Anspruch 2 **charakteristisch dadurch**, dass die erhaltene Suspension der Ballaststoffe und das Autolysat aller erst bis zu 48 Stunden kühlgelagert, dem Pasteurisierungsprozess unterworfen und anschließend mit Basiskomponenten in Form von Malzbasis oder Aroma-Wasserbasis, angereichert mit Geschmacks-und Geruchszusätzen, verbunden werden und so alkoholfreies Funktionsgetränk bilden.

4. Herstellungsmethode für alkoholfreies Funktionsgetränk gemäß Anspruch 2 **charakteristisch dadurch**, dass die erhaltene Suspension der Ballaststoffe und das Autolysat aller erst mit Basiskomponenten in Form der Malzbasis oder des alkoholfreien Biers oder der Aroma-Wasserbasis, angereichert mit Geschmacks- und Geruchskomponenten, verbunden werden und so ein alkoholfreies Funktionsgetränk bilden, das anschließend dem Pasteurisierungsprozess unterworfen wird.

## Revendications

1. Boisson fonctionnelle non alcoolisée à base de malt ou de bière non alcoolisée ou à base d'eau et d'arômes enrichie en acides aminés et en fibres alimentaires **caractérisée en ce qu'**elle contient dans sa composition en même temps un autolysat obtenu de levure épaisse résiduaire et des fibres alimentaires obtenue d'une drêche broyée.

2. Mode de production d'une boisson fonctionnelle non alcoolisée à base de malt ou de bière non alcoolisée ou à base d'eau et d'arômes enrichie en acides aminés ou en fibres alimentaires **caractérisé en ce qu'**une suspension de fibres alimentaires et l'autolysat de levure sont obtenus dans des procédés techniques à part (parallèles), la suspension de fibres alimentaires étant obtenue de telle manière que la drêche est mélangée avec de l'eau en proportion 1:1, ensuite broyée à température ambiante sur un homogénéisateur, et ensuite la suspension obtenue est filtrée sur un tissu filtrant, afin de séparer des molécules de plus de 0,5 mm, et l'autolysat de levure étant obtenu de telle manière que la levure épaisse est soumise au processus d'incubation mené dans un réacteur à enveloppe chauffante (45-50°C) et mélangée avec de l'eau en proportion 1:1, avec des saponines ajoutées (extrait de Quillaia) en tant qu'inducteur, où la concentration des saponines est de 0,04 % par rapport à la levure épaisse diluée, et ensuite après la fin de l'étape d'autolyse on procède à la séparation de la fraction solide, par centrifugation dans une centrifugueuse avec réfrigération, la suspension de fibres alimentaires obtenue de telle manière et l'autolisat étant combinés avec les composants de base sous forme de base de malt ou de bière non alcoolisée ou de base d'eau et d'arômes, enrichis d'additifs de saveur et d'arôme, formant une boisson fonctionnelle non alcoolisée.

3. Procédé de fabrication d'une boisson fonctionnelle non alcoolisée selon la revendication 2 **caractérisé en ce que** la suspension de fibres alimentaires obtenue et l'autolysat sont stockés en premier dans des conditions réfrigérées jusqu'à 48 heures, ensuite soumis au processus de pasteurisation, et ensuite combinés avec les composants de base sous forme de base de malt ou de bière non alcoolisée ou de base d'eau et d'arômes, enrichis d'additifs de saveur et d'arôme, formant une boisson fonctionnelle non alcoolisée.

4. Procédé de fabrication d'une boisson fonctionnelle non alcoolisée selon la revendication 2 **caractérisé en ce que** la suspension de fibres alimentaires obtenue et l'autolysat sont en premier combinés avec les composants de base sous forme de base de malt ou de bière non alcoolisée ou de base d'eau et d'arômes, enrichis d'additifs de saveur et d'arôme, formant une boisson fonctionnelle non alcoolisée qui est ensuite soumise au processus de pasteurisation.
